# EUROPEAN PATENT APPLICATION

(11) **EP 2 130 641 A1**
(43) Date of publication of application: **09.12.2009**
(21) Application number: 08157510.2
(22) Date of filing: 03.06.2008
(51) Int. Cl.: B23P 15/26, F16L 53/00, F24H 9/18, C09J 175/04, C08G 18/66

(54) **Polyurethane Adhesive Composition**

(71) Applicant: DOW GLOBAL TECHNOLOGIES INC., Midland MI 48674 (US)
(72) Inventor: Cocconi, Carlo, 42015 Correggio (IT); Corinti, Elisa, 42015 Corregio (IT)
(74) Representative: Hull, John Philip

(57) **Abstract**

A method of adhering a first component to a second component, comprising the steps of: adhering the two components together using a composition comprising a polyurethane and from 20 to 80 weight percent of a particulate metal, metal salt or metal alloy filler, wherein polyurethane is the reaction product of:
a) a first polyol, the first polyol having a molecular weight of less than 1000;
b) a second polyol, the second polyol having a molecular weight of from 1500 to 10000;
c) at least one polyisocyanate;
d) at least one curing agent, and

wherein the particulate metal, metal salt or metal alloy filler has a thermal conductivity of at least 150 watts/m.°K; and curing the composition.

## Description

The present invention relates to a method of adhering a first component to a second component and a polyurethane composition suitable for adhering the two components.

Oil pipelines require good thermal control in order to avoid viscosity increases in the oil, which makes pumping the oil more difficult. Therefore, in some cases, heating or cooling trace lines need to be attached to the transportation pipeline in order to keep the oil or gas in the pipeline at a relatively constant level. Currently, these trace lines are usually attached to the pipeline by welding. Alternative methods of attachment are mechanical straps or fasteners.

Welding has the disadvantage that the trace line must be made of metal. Metal trace lines are difficult to attach in the field and require heavy equipment to do so.

GB 1081889 discloses a pipe line with a heating tube and a metal or alloy strip therebetween to improve the heat transfer. The heating tube is connected using an insulated casing.

US4401156 discloses a heat transfer apparatus to releasably secure a traceline. The securing means are metal clips.

Accordingly, it would be advantageous to provide a composition which can attach a tracer line to a pipeline without the need for welding, whilst at the same time providing a good thermal bridge between the two, and also allowing for a simple assembly process.

In a first aspect of the present invention, there is provided a composition comprising a polyurethane and from 20 to 80 weight percent of a particulate metal, metal salt or metal alloy filler, wherein polyurethane is the reaction product of:
a) a first polyol, the first polyol having a molecular weight of less than 1000;
b) a second polyol, the second polyol having a molecular weight of from 1500 to 10000;
c) at least one polyisocyanate and
d) at least one curing agent, and
wherein the particulate metal, metal salt or metal alloy filler has a thermal conductivity of at least 150 watts/m.°K. The metal or metal alloy can be non-ferromagnetic or ferromagnetic. In one preferred embodiment, the metal or metal alloy is non-ferromagnetic, and more preferably at least one of aluminium, copper, zinc, gold, bronze and silver. Preferably, the particulate is in the form of one or more of granules, platelets, pellets, beads, flakes, particles, lamellae or grains. Preferably, at least one of the first and second polyols is a polyether polyol, and more preferably, both first and second polyols are polyether polyols.

A particularly preferred composition comprises a polyurethane and a particulate metal or metal alloy filler, wherein the polyurethane is the reaction product of:
a) from 40 to 60 parts by weight of a first polyether polyol, the first polyether polyol having a molecular weight of from 100 to 600 and a functionality of from 2 to 8;
b) from 40 to 60 parts by weight of a second polyether polyol, the second polyether polyol having a molecular weight of from 1500 to 8000 and a functionality of from 2 to 6;
c) at least one isocyanate, wherein the isocyanate is present in an amount to provide for an isocyanate index of from 80 to 115;
d) at least one aromatic diamine curing agent; and
wherein the composition comprises from 50 to 200 parts by weight of a particulate aluminium filler.

The composition of the first aspect of the invention is preferably used as an adhesive. The composition is suited for use as an adhesive which provides a thermal bridge between the parts to be adhered. A particularly preferred use is for adhering a trace line to a pipeline. A trace line is a line which can be used to cool or heat the contents of the pipeline.

In a second aspect of the present invention, there is provided a method of adhering a first object to a second object using the composition according to the first aspect and then curing the composition. Preferably, the first object is a pipeline and the second object is a trace line.

The adhesive provides a large area of contact between the pipeline and the trace line to act as a thermal bridge between the two, which is beneficial for controlling the temperature in the pipeline.

In a third aspect of the present invention, there is provided a pipeline additionally comprising the cured composition according to the first aspect and at least one trace line.

In a fourth aspect of the present invention, there is provided the use of the composition of the first aspect as an adhesive. Preferably, the composition is used as an adhesive for adhering trace lines to pipelines.

It is preferred that the composition of the present invention is non-cellular, that is, the composition is not a foam. In one preferred embodiment, the composition has a density of at least 1.2 g/cm³. More preferably, the composition has a density of at least 1.3 and yet more preferably 1.45 g/cm³. Preferably, the composition has a density of less than 2.2 g/cm³, more preferably less than 1.8 g/cm³.

It is preferred that the only polymer present is a polyurethane in the composition. It is particularly preferred that the composition does not contain any polyepoxide.

A number of different metal or metal alloy particulates are suitable for use as the filler in the present invention. The metal or metal alloy particulate to be used can either be one metal or metal alloy or a mixture of metals and/or metal alloys. The metal or metal alloy to be used is typically one having a high thermal conductivity. Suitable metals are ones having a thermal conductivity of at least 150 watts/m.°K. It is preferred that the metal has a thermal conductivity of at least 180, more preferably at least 200 watts/m.°K. The metal or metal alloy is suitably one which is not ferro-magnetic. However, in some cases, ferromagnetic metals can be used on their own or in combination with non-ferromagnetic metals. Suitable metals or metal alloys include aluminium (235 watts/m.°K), copper (400 watts/m.°K), zinc (194 watts/m.°K), bronze, gold (317 watts/m.°K) and silver (429 watts/m.°K). It is preferred that the metal is aluminium or copper or a combination thereof, and more preferably the metal is aluminium.

In the alternative, a metal salt can be used, so long as it has the requires thermal conductivity. The metal salt can be used instead of or in addition to the metal or metal alloy.

The metal filler is in the form of a particulate such that it can be spread throughout the resultant polyurethane composition during mixing of the polyol side, prior to addition of the isocyanate. Exemplary types of particulate include granules, platelets, pellets, beads, flakes, particles or grains. However, the present invention can suitably be used with any type of particulate. It is particularly suitable that the metal or metal alloy filler is in the form of spherical or substantially spherical particulate. Fillers of this type offer the best all round characteristics. Where fillers which are platelets are used, the thermal conductivity of the resultant polymer is substantially improved. However, the reaction mixture is very viscous and hard to mix, and therefore platelets are less favourable than spherical particulate. Preferably the particulate has a mean diameter of from 20 to 100 micrometers, regardless of shape. It is particularly preferred that the filler consists of metal or metal alloy particles having a mean diameter of from 20 to 40 micrometers. Particularly preferred are aluminium particles having a mean diameter of from 30 to 40 micrometers.

The metal or metal alloy filler is preferably used in an amount of from 20 to 80 weight percent, based on the total weight of the composition. It is further preferred that the metal filler is used in an amount of from 30 to 70 weight percent, and yet more preferably from 35 to 55 weight percent.

The compositions of the present invention are formed using a polyurethane, which is the reaction product of at least one polyol and at least one isocyanate. Although it is preferred that the polyol is a polyether polyol, a polyester polyol can be used.

Suitably, the composition is formed using a first polyol having a molecular weight of less than 1000 (a low molecular weight polyol) and a second polyol having a molecular weight of from 1500 to 10000 (a high molecular weight polyol). The combination of two different polyols provides a polyurethane having excellent physical properties for use as a mould. The low molecular weight polyol provides the hardness for the resultant composition, whilst the high molecular weight composition provides elasticity to prevent the composition being too brittle.

It is preferred that at least one of the first and second polyols are polyether polyols, and more preferably, both first and second polyols are polyether polyols.

The low molecular weight polyether polyol preferably has a molecular weight of from 100 to 600g/mol, more preferably from 125 to 500 and most preferably from 150 to 450g/mol.

The low molecular weight polyether polyols include those obtained by the alkoxylation of suitable starting molecules with an alkylene oxide, such as ethylene, propylene, butylene oxide, or a mixture thereof. Examples of initiator molecules include water, ammonia, aniline or polyhydric alcohols such as dihydric alcohols, especially the alkane polyols such as ethylene glycol, propylene glycol, hexamethylene diol, glycerol, trimethylol propane or trimethylol ethane, or the low molecular weight alcohols containing ether groups such as diethylene glycol, triethylene glycol, dipropylene glycol or tripropylene glycol. Other commonly used initiators include pentaerythritol, xylitol, arabitol, sorbitol, mannitol and the like. Particularly preferred is glycerin.

Preferably a poly(propylene oxide) polyol, including poly(oxypropylene-oxyethylene) polyols, is used. Preferably the oxyethylene content should comprise less than about 40 weight percent of the total and preferably less than about 25 weight percent of the total weight of the polyol. The ethylene oxide can be incorporated in any manner along the polymer chain, which stated another way means that the ethylene oxide can be incorporated either in internal blocks, as terminal blocks, may be randomly distributed along the polymer chain, or may be randomly distributed in a terminal oxyethylene-oxypropylene block. These polyols are conventional materials prepared by conventional methods.

Other polyether polyols include the poly(tetramethylene oxide) polyols, also known as poly(oxytetramethylene) glycol, that are commercially available as diols. These polyols are prepared from the cationic ring-opening of tetrahydrofuran and termination with water as described in Dreyfuss, P. and M. P. Dreyfuss, Adv. Chem. Series, 91, 335 (1969).

The low molecular weight polyol preferably has a functionality, i.e the number of isocyanate reactive hydrogens per polyol, of at least 1.5, more preferably from 2 to 8, yet more preferably from 2 to 6 and most preferably from 2 to 4.

The polyol preferably has a hydroxyl number of from 100 to 700 and preferably from 400 to 600.

A particularly preferred low molecular weight polyether polyol is Voranol® CP 260, which is available from The Dow Chemical Company. This polyol has a functionality of 3 and a molecular weight of 260g/mol.

The amount of low molecular weight polyol used is preferably from 5 to 95 weight percent, based on the total amount of polyol used. More preferably, from 10 to 90, yet more preferably from 15 to 85 and most preferably from 40 to 60 weight percent of low molecular weight polyol is used.

The high molecular weight polyether polyols include those obtained by the alkoxylation of suitable starting molecules with an alkylene oxide, such as ethylene, propylene, butylene oxide, or a mixture thereof. Examples of initiator molecules include water, ammonia, aniline or polyhydric alcohols such as dihydric alcohols having a molecular weight of 62 to 399, especially the alkane polyols such as ethylene glycol, propylene glycol, hexamethylene diol, glycerol, trimethylol propane or trimethylol ethane, or the low molecular weight alcohols containing ether groups such as diethylene glycol, triethylene glycol, dipropylene glycol or tripropylene glycol. Other commonly used initiators include pentaerythritol, xylitol, arabitol, sorbitol, mannitol and the like. Particularly preferred is glycerin.

Preferably a poly(propylene oxide) polyol, including poly(oxypropylene-oxyethylene) polyols, is used. Preferably the oxyethylene content should comprise less than about 40 weight percent of the total and preferably less than about 25 weight percent of the total weight of the polyol. The ethylene oxide can be incorporated in any manner along the polymer chain, which stated another way means that the ethylene oxide can be incorporated either in internal blocks, as terminal blocks, may be randomly distributed along the polymer chain, or may be randomly distributed in a terminal oxyethylene-oxypropylene block. These polyols are conventional materials prepared by conventional methods.

Other polyether polyols include the poly(tetramethylene oxide) polyols, also known as poly(oxytetramethylene) glycol, that are commercially available as diols. These polyols are prepared from the cationic ring-opening of tetrahydrofuran and termination with water as described in Dreyfuss, P. and M. P. Dreyfuss, Adv. Chem. Series, 91, 335 (1969).

The high molecular weight polyol preferably has a molecular weight of from 1500 to 8000, more preferably from 2000 to 7000, yet more preferably from 2500 to 6000 and most preferably from 4000 to 5000 g/mol. The high molecular weight polyol preferably has a functionality of at least 1.5, more preferably from 2 to 6, yet more preferably from 2 to 4 and most preferably from 2 to 3. A particularly preferred polyol is a mixed propylene oxide-ethylene oxide polyol, with an ethylene oxide endcap. The polyol preferably has a hydroxyl number of from 20 to 90 and more preferably from 30 to 40. A particularly preferred high molecular weight polyether polyol is Voranol® CP 4711, which is available from The Dow Chemical Company. This polyol is formed using a glycerin starter and is a mixed ethylene oxide-propylene oxide polyol having a 14% ethylene oxide endcap. The polyol has a molecular weight of 4700, an OH value of 35 and a primary OH content of 70 to 75%.

The amount of high molecular weight polyol used is preferably from 5 to 95 weight percent, based on the total amount of polyol used. More preferably, from 10 to 90, yet more preferably from 15 to 85, even more preferably from 30 to 70 and most preferably from 40 to 60 weight percent of high molecular weight polyol is used.

Suitable polyester polyols which can be used instead of one or both of the polyether polyols include those produced from dicarboxylic acids, preferably aliphatic dicarboxylic acids, having 2 to 12 carbon atoms in the alkylene radical, and multifunctional alcohols, preferably diols. These acids include, for instance, aliphatic dicarboxylic acids such as glutaric acid, pimelic acid, suberic acid, azelaic acid, sebacic acid, undecanedioic acid, dodecanedioic acid, and preferably, succinic and adipic acids; cycloaliphatic dicarboxylic acids such as 1,3- and 1,4-cyclohexane dicarboxylic acid; and aromatic dicarboxylic acids such as phthalic acid and terephthalic acid. Examples of di- and multifunctional, particularly difunctional, alcohols are: ethylene glycol, diethylene glycol, propylene glycol, dipropylene glycol, 1,3-propanediol, 1,10-decanediol, glycerine, trimethylolpropane, and preferably, 1,4-butanediol, and 1,6-hexanediol. Other suitable polyester polyols would be known to the skilled person.

Other polyols can also be used in combination with the low and high molecular weight polyols. Such polyols are preferably used in an amount of less than 10 weight percent of the total polyol used. However, it is preferred that no other polyols are used.

Suitable polyisocyanates for use in the present invention include aliphatic, cycloaliphatic, araliphatic and preferably aromatic polyfunctional isocyanates.

Specific examples are: alkylene diisocyanates having from 4 to 12 carbon atoms in the alkylene radical, for example dodecane 1,12- diisocyanate, 2-ethyltetramethylene 1,4-diisocyanate, 2- methylpentamethylene 1,5-diisocyanate, tetramethylene 1,4-diisocyanate and preferably hexamethylene 1,6-diisocyanate; cycloaliphatic diisocyanates such as cyclohexane 1,3- and 1,4-diisocyanate and also any mixtures of these isomers, 1-isocyanato-3,3,5-trimethyl-5- isocyanatomethylcyclohexane (isophorone diisocyanate), hexahydrotolylene 2,4- and 2,6-diisocyanate and also the corresponding isomer mixtures, dicyclohexylmethane 4,4'-, 2,2'- and 2,4'-diisocyanate and also the corresponding isomer mixtures, and preferably aromatic diisocyanates and polyisocyanates, such as tolylene 2,4- and 2,6-diisocyanate and the corresponding isomer mixtures, diphenylmethane 4, 4'-, 2,4'- and 2,2'- diisocyanate and the corresponding isomer mixtures, mixtures of diphenylmethane 4,4'- and 2,4'-diisocyanates, polyphenylpolymethylene polyisocyanates, mixtures of diphenylmethane 4,4'-, 2,4'- and 2,2'- diisocyanates and polyphenylpolymethylene polyisocyanates (raw MDI) and mixtures of raw MDI and tolylene diisocyanates. The organic diisocyanates and polyisocyanates can be used individually or in the form of their mixtures.

Other suitable isocyanates are modified polyfunctional isocyanates, i.e. products which are obtained by chemical reaction of organic diisocyanates and/or polyisocyanates.

Examples which may be mentioned are diisocyanates and/or polyisocyanates containing ester, urea, biuret, allophanate, carbodiimide, isocyanurate, uretdione and/or urethane groups. Specific examples are: organic, preferably aromatic polyisocyanates containing urethane groups and having NCO contents of from 33.6 to 15% by weight, preferably from 31 to 21 % by weight, based on the total weight, for example diphenylmethane 4,4'-diisocyanate modified with low molecular weight diols, triols, dialkylene glycols, trialkylene glycols or polyoxyalkylene glycols having molecular weights up to 6000, in particular having molecular weights up to 1500, modified diphenylmethane 4,4'- and 2,4'-diisocyanate mixtures or modified raw MDI or tolylene 2,4- or 2,6-diisocyanate, with examples of dialkylene glycols or polyoxyalkylene glycols which can be used individually or as mixtures being: diethylene glycol, dipropylene glycol, polyoxyethylene, polyoxypropylene and polyoxypropylene-polyoxyethylene glycols, triols and/or tetrols. Also suitable are prepolymers containing NCO groups and having NCO contents of from 25 to 3.5% by weight, preferably from 21 to 14% by weight, based on the total weight, and prepared from the polyester and/or preferably polyether polyols described below and diphenylmethane 4, 4'-diisocyanate, mixtures of diphenylmethane 2,4'- and 4,4'-diisocyanate, tolylene 2,4- and/or 2,6-diisocyanates or raw MDI. Other modified polyisocyanates which have been found to be useful are liquid polyisocyanates containing carbodiimide groups and/or isocyanurate rings and having NCO contents of from 33.6 to 15% by weight, preferably from 31 to 21% by weight, based on the total weight, for example those on the basis of diphenylmethane 4,4'-, 2,4'- and/or 2,2'-diisocyanates and/or tolylene 2, 4- and/or 2,6-diisocyanate.

The modified polyisocyanates can, if desired, be mixed with one another or with unmodified organic polyisocyanates such as diphenylmethane 2,4'- and/or 4,41-diisocyanate, raw MDI, tolylene 2,4- and/or 2,6-diisocyanate.

Polyisocyanates which have been found to be particularly useful are diphenylmethane diisocyanate isomer mixtures or raw MDI having a diphenylmethane diisocyanate isomer content of from 33 to 55% by mass and polyisocyanate mixtures containing urethane groups and based on diphenylmethane diisocyanate having an NCO content of from 15 to 33% by mass.

A preferred isocyanate is ISONATE® M143, which is commercially available from The Dow Chemical Company. ISONATE® M143 has an NCO content of 29.5 weight percent, an equivalent weight of 1.43 and a functionality of 2.15.

When preparing a polyurethane polymer according to this invention, the polyisocyanate is used in an amount to provide for an isocyanate reaction index of advantageously from 80 to 130, preferably from 85 to 110, and more preferably from 90 to 105. By the term "isocyanate index" it is understood that at an index of 100, one equivalent of isocyanate is present for each isocyanate reactive hydrogen atom present from the polyol, or other active hydrogen atom bearing substance able to react with the polyisocyanate.

The composition according to the present invention additionally comprises a curing agent. It is preferred that the curing agent permits the composition to cure at low temperatures. The curing agent is preferably a material having two isocyanate-reactive groups per molecule and an equivalent weight per isocyanate-reactive group of less than 400, preferably less than 300 and especially from 31-125 daltons. Representative of suitable curing agents include polyhydric alcohols, aliphatic diamines including polyoxyalkylenediamines, and mixtures thereof. The isocyanate reactive groups are preferably hydroxyl, primary aliphatic amine or secondary aliphatic amine groups. The chain extenders may be aliphatic or cycloaliphatic or aromatic, and are exemplified by triols, tetraols, diamines, triamines, aminoalcohols, and the like. Representative curing agents include ethylene glycol, diethylene glycol, 1,3-propane diol, 1,3- or 1,4-butanediol, dipropylene glycol, 1,2- and 2,3-butylene glycol, 1,6-hexanediol, neopentylglycol, tripropylene glycol, ethylene diamine, 1,4-butylenediamine, 1,6-hexamethylenediamine, 1,5-pentanediol, 1,6-hexanediol, 1,3-cyclohexandiol, 1,4-cyclohexanediol; 1,3-cyclohexane dimethanol, 1,4-cyclohexane dimethanol, N-methylethanolamine, N-methyliso-propylamine, 4-aminocyclohexanol, 1,2-diaminotheane, 1,3-diaminopropane, hexylmethylene diamine, methylene bis(aminocyclohexane), isophorone diamine, 1,3- or 1,4-bis(aminomethyl) cyclohexane, diethylenetriamine, and mixtures or blends thereof.

Preferred curing agents may be selected from the group consisting of amine terminated polyethers such as, for example, JEFFAMINE D-400 from Huntsman Chemical Company, 1,5-diamino-3-methyl-pentane, isophorone diamine, bis(aminomethyl) cyclohexane and isomers thereof, ethylene diamine, diethylene triamine, aminoethyl ethanolamine, triethylene tetraamine, triethylene pentaamine, ethanol amine, lysine in any of its stereoisomeric forms and salts thereof, hexane diamine, hydrazine and piperazine.

Particularly preferred curing agents are aromatic amines. The curing agent or chain extender may be an aromatic diamine or a combination of aromatic diamines. Examples of suitable aromatic diamines are 4,4'-methylene bis-2-chloroaniline, 2,2',3,3'-tetrachloro-4,4'-diaminophenyl methane, p,p'-methylenedianiline, p-phenylenediamine or 4,4'-diaminodiphenyl; and 2,4,6-tris(dimethylaminomethyl)phenol, 2,4-diethyl-6-methyl-1,3-benzenediamine, 4,4'-methylenbis(2,6-diethylbenzeneamine), dimethylthiotoluenediamine (DMTDA) such as E-300 from Albermarle Corporation ( amixture of 3,5-dimethylthio-2,6-toluenediamine and 3,5-dimethylthio-2,4-toluenediamine), diethyltoluenediamine (DETDA) such as E-100 Ethacure from Albermarle (a mixture of 3,5-diethyltoluene-2,4-diamine and 3,5-diethyltoluene-2,6-diamine). Aromatic diamines have a tendency to provide a stiffer (i.e., having a higher Mooney viscosity) product than aliphatic or cycloaliphatic diamines. A curing agent may be used either alone or in a mixture.

The curing agent may be modified to have pendant functionalities to further provide crosslinker, flame retardation, or other desirable properties. Suitable pendant groups include carboxylic acids, phosphates, halogens, etc.

In embodiments of the present invention, the curing agent may include a mixture of any of the above mentioned curing agents. The curing agent mixture may include both a diol and an aromatic diamine, including the amines recited above.

The particularly preferred curing agent is diethyltoluene diamine.

Additional optional components which are suitably included in the composition include additional filler, surface active agents, water absorbents, anti-foaming agents, and colorants. These components are typically added to the polyol side of the reactants, prior to addition of the polyisocyanate.

Additional fillers can be any standard filler known to the skilled person, such as for example chalk or mica. Additional fillers, where present, are used in amounts of less that 10% and preferably less than 5% by weight, based on the total weight of the composition.

Suitable surface-active substances are, for example, compounds which serve to aid the homogenization of the starting materials and may also be suitable for regulating the cell structure of the plastics. Examples which may be mentioned are emulsifiers such as the sodium salts of castor oil sulphates or of fatty acids and also amine salts of fatty acids, e.g. diethylamine oleate, diethanolamine stearate, diethanolamine ricinoleate, salts of sulfonic acids, e.g. alkali metal or ammonium salts of dodecylbenzene- or dinaphthylmethanedisulfonic acid and ricinoleic acid; foam stabilizers such as siloxane-oxalkylene copolymers and other organopolysiloxanes, ethoxylated alkylphenols, ethoxylated fatty alcohols, paraffin oils, castor oil or ricinoleate esters, Turkey red oil and peanut oil and cell regulators such as paraffins, fatty alcohols and dimethylpolysiloxanes. The above-described oligomeric acrylates having polyoxyalkylene and fluoroalkane radicals as side groups are also suitable for improving the emulsifying action, the cell structure and/or stabilizing the foam. The surface-active substances are usually employed in amounts of from 0.01 to 5 parts by weight, based on 100 parts by weight of polyol.

Any suitable water absorbents known to the skilled person can be used. However, it is preferred that the water absorbent is a zeolite. The zeolite can be added in powder form or in paste form. A particularly preferred zeolite paste is Voratron EG 711, produced by the Dow Chemical Company.

Any suitable anti-foaming agents known to the skilled person can be used, including silicone and non-silicone containing anti-foaming agents. It is preferred that the anti-foaming agent is used in an amount of less than 2 percent by weight. One preferred commercially available anti-foaming agent is Antifoam 1500, which is produced by Dow Coming.

Preferred embodiments of the invention will be described with reference to the drawings in which:-
Figure 1 is a bar chart showing the thermal conductivity of a series of polymers containing a filler;
Figure 2 shows a small diameter pipe, such as a trace pipe being attached to a large diameter pipe using the composition of the present invention.

### Examples 1 to 10

A number of different compositions were made using a variety of different fillers, as well as a polyurethane-only composition. All of the compositions were made using the same basic polyurethane composition as shown in Table 1:

**Table 1**

| Component | Amount (by weight) |
|---|---|
| High molecular weight polyol | 46.19 |
| Catalyst (Triethylene diamine 33 % in dipropylene glycol) | 0.05 |
| Zeolite paste (Voratron EG 711) | 7.39 |
| Low molecular weight polyol | 46.19 |

The high molecular weight polyol is a glycerol initiated polyoxypropylene polyol with 15 wt% ethylene oxide cap and having a MW of approximately 5000. The low molecular weight polyol is a glycerol initiated polyoxypropylene polyols having a molecular weight of approximately 255

The isocyanate (Isonate 143M) was added to give an isocyanate index of between 90 and 95.

Filler, where added, was added to a mixture of the polyols, zeolite paste and catalyst, and was stirred thoroughly. The isocyanate and the polyol containing mixture are then mixed together.

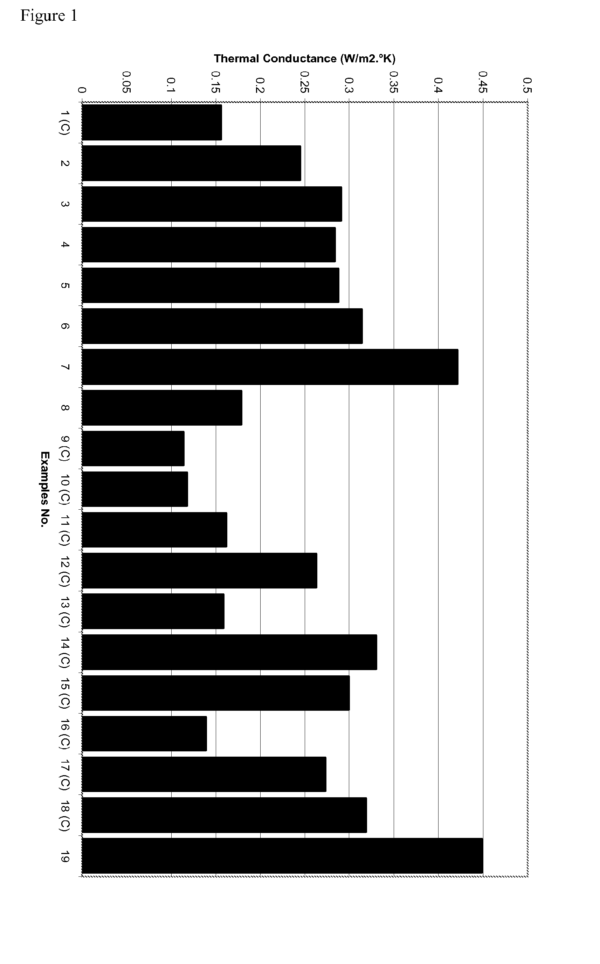

In Examples 1 to 20, the polyurethane mixture for each example was formed into a plate of dimension 20cm x 20cm by 1 cm and the thermal conductance of the plate was measured using a LASERCOMP FOX 200 using EN 12667. The thermal conductance was measured in the temperature range of 30 to 40°C. The weight percentage for each filler used, based on the total weight of the composition, and the resulting thermal conductance of the composition are given in Table 2. The thermal conductance results are shown in Figure 1.

**Table 2**

| EXAMPLE | FILLER | WT % FILLER | THERMAL CONDUCTANCE (W/m².°K) |
|---|---|---|---|
| 1 (C) | No Filler | - | 0.156 |
| 2 | 30 micrometers Al powder | 35% | 0.245 |
| 3 | 30 micrometers Al powder | 50% | 0.291 |
| 4 | 100 micrometers Al powder | 50% | 0.284 |
| 5 | 100 micrometers Al powder | 60% | 0.288 |
| 6 | 30 micrometers Al powder | 75% | 0.314 |
| 7 | 30 micrometers lamellar Al | 30% | 0.421 |
| 8 | 30 micrometers Cu powder | 35% | 0.179 |
| 9 (C) | 50 micrometers BaSO₄ powder | 35% | 0.114 |
| 10 (C) | 50 micrometers BaSO₄ powder | 50% | 0.118 |
| 11 (C) | 50 micrometers CaCO₃ powder | 35% | 0.162 |
| 12 (C) | 50 micrometers dolomite (CaMg(CO₃)₂) powder | 50% | 0.263 |
| 13 (C) | 50 micrometers FeS powder | 50% | 0.159 |
| 14 (C) | 50 micrometers silica (SiO₂) powder | 50% | 0.33 |
| 15 (C) | 25 micrometers pyrite (FeO2) powder | 50 % | 0.3 |
| 16 (C) | 175 micrometers pyrite (FeO2) powder | 50 % | 0.139 |
| 17 (C) | 3 micrometers pyrite (FeO2) powder | 50 % | 0.273 |
| 18 (C) | 50 micrometers alumina (Al₂O₃) powder | 50% | 0.319 |
| 19 | 30 micrometer Al powder and lamellar Al | 30% powder, 20% lamellar | 0.449 |

Examples marked (C) are comparative examples and are not part of the present invention. They relate to compositions made with the same polyurethane, but with no filler or fillers not having sufficiently high thermal conductivity.

It can be seen that the composition comprising the mixture of Al powder and lamellar Al has a particularly high thermal conductance, which is higher than the powder or lamellar Al alone. The use of a mixture of particulate of different shapes appears to provide a synergistic effect. Accordingly, in a preferred embodiment, the metal particulate is formed of a mixture of substantial spherical particulate and lamellar particulate.

The addition of a curing agent to the composition allows it to cure at a significantly lower temperature than the comparable composition without the curing agent. This allows the compositions according to the present invention to be applied more readily as adhesives.

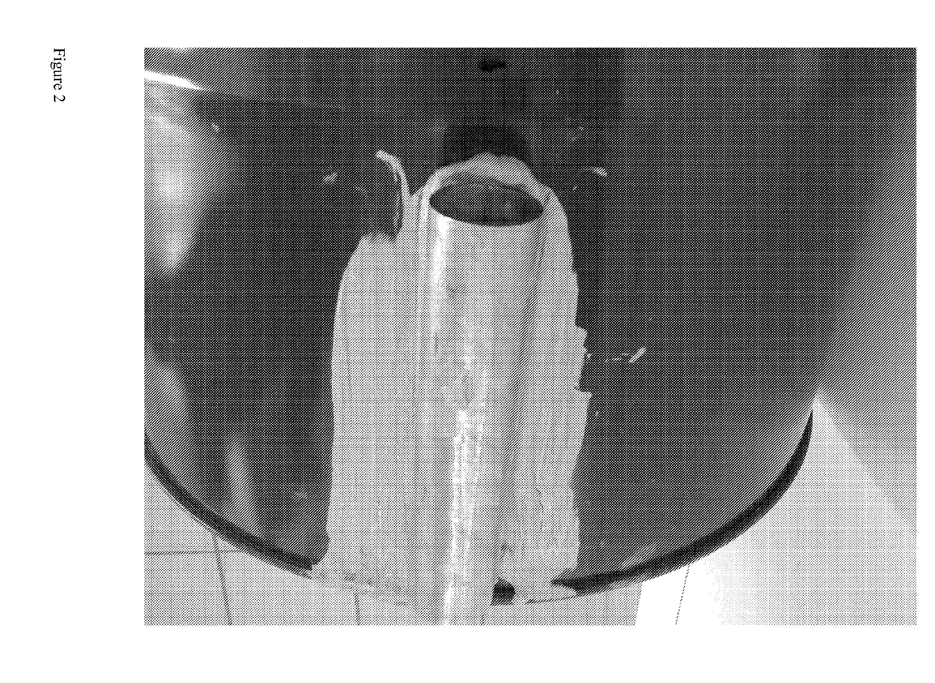

The compositions according to the present invention are particularly suited for adhering a trace pipe to a large diameter pipe. In a preferred method, a bead of the composition is applied to the surface of the large diameter oil pipe where the trace pipe is to be attached. The trace pipe is embedded into the bead of composition and the composition is allowed to cure. The composition provides an excellent thermal transfer bridge between the trace pipe and the large diameter pipe. Optionally, a further coat or layer can be applied to the outside of the trace pipe to protect it. This further coat or layer can be any suitable material. Figure 2 shows a small diameter pipe being adhered to a large diameter pipe using a composition according to the present invention to demonstrate the adhesion properties of the composition.

## Claims

1. A method of adhering a first component to a second component, comprising the steps of: adhering the two components together using a composition comprising a polyurethane and from 20 to 80 weight percent of a particulate metal, metal salt or metal alloy filler, wherein polyurethane is the reaction product of:
a) a first polyol, the first polyol having a molecular weight of less than 1000;
b) a second polyol, the second polyol having a molecular weight of from 1500 to 10000;
c) at least one polyisocyanate;
d) at least one curing agent, and
wherein the particulate metal, metal salt or metal alloy filler has a thermal conductivity of at least 150 watts/m.°K; and
curing the composition.

2. A method as claimed in claim 1 having a density of at least 1.2 g/cm³.

3. A method as claimed in claim 1 or claim 2, wherein the first and second polyols are polyether polyols.

4. A method as claimed in any one of claims 1 to 3, wherein the metal or metal alloy is non-ferromagnetic.

5. A method as claimed in claim 4, where in the metal or metal alloy is at least one of aluminium, copper, silver, gold, bronze and zinc.

6. A method as claimed in any one of the preceding claims, wherein the metal, metal salt or metal alloy filler is present in an amount of from 30 to 70 weight percent, based on the total weight of composition.

7. A method as claimed in any one of the preceding claims, wherein the particulate is in the form of one or more of granules, platelets, pellets, beads, flakes, particles, lamellae and grains.

8. A method as claimed in any one of the preceding claims, wherein the composition additionally comprises a water absorbent.

9. A method as claimed in claim 8, wherein the water absorbent is a zeolite.

10. A method as claimed in any one of the preceding claims, wherein the first polyether polyol has a molecular weight of 100 to 600 and a functionality of from 2 to 8.

11. A method as claimed in any one of the preceding claims, wherein the second polyether polyol has a molecular weight of from 1500 to 8000 and a functionality of from 2 to 6.

12. A method as claimed in any one of the preceding claims, wherein the isocyanate is an aromatic polyfunctional isocyanate.

13. A method as claimed in any one of the preceding claims, wherein the composition additionally comprises an anti-foaming agent.

14. A method as claimed in any one of the preceding claims, wherein the first polyol is present in an amount of from 5 to 95 weight percent and the second polyol is present in an amount of from 5 to 95 weight percent based on the total amount of polyol in the composition.

15. A method of adhering a first component to a second component, comprising the steps of: adhering the two components together using a composition comprising a polyurethane and a particulate metal or metal alloy filler, wherein the polyurethane is the reaction product of:
a) from 40 to 60 parts by weight of a first polyether polyol, the first polyether polyol having a molecular weight of from 100 to 600 and a functionality of from 2 to 8;
b) from 40 to 60 parts by weight of a second polyether polyol, the second polyether polyol having a molecular weight of from 1500 to 8000 and a functionality of from 2 to 6;
c) at least one isocyanate, wherein the isocyanate is present in an amount to provide for an isocyanate index of from 80 to 115;
d) at least one diamine curing agent, and
wherein the composition comprises from 50 to 200 parts by weight of a particulate aluminium filler; and
curing the composition.

16. A method as claimed in any one of claims 1 to 15, wherein the first component is a pipeline and the second component is a trace line.

17. A pipeline additionally comprising:
a cured composition comprising a polyurethane and from 20 to 80 weight percent of a particulate metal, metal salt or metal alloy filler, wherein polyurethane is the reaction product of:
a) a first polyol, the first polyol having a molecular weight of less than 1000;
b) a second polyol, the second polyol having a molecular weight of from 1500 to 10000;
c) at least one polyisocyanate;
d) at least one curing agent, and
wherein the particulate metal, metal salt or metal alloy filler has a thermal conductivity of at least 150 watts/m.°K; and
a traceline.

18. A composition comprising a polyurethane and from 20 to 80 weight percent of a particulate metal, metal salt or metal alloy filler, wherein polyurethane is the reaction product of:
a) a first polyol, the first polyol having a molecular weight of less than 1000;
b) a second polyol, the second polyol having a molecular weight of from 1500 to 10000;
c) at least one polyisocyanate;
d) at least one curing agent, and
wherein the particulate metal, metal salt or metal alloy filler has a thermal conductivity of at least 150 watts/m.°K.

19. The use of the composition of claim 18 as an adhesive.
